# EUROPEAN PATENT APPLICATION

(11) **EP 3 346 768 A1**
(43) Date of publication of application: **11.07.2018**
(21) Application number: 18150448.1
(22) Date of filing: 05.01.2018
(51) Int. Cl.: H04W 52/02

(54) **METHOD OF PERFORMING TIMING ARRANGEMENT IN A MESH NETWORK**

(30) Priority: 10.01.2017 US 201762444382 P
(71) Applicant: Quantek, Inc., Hsinchu City 300 (TW)
(72) Inventor: Chen, Yu-Liang, Chiayi City 600 (TW); Wang, Sheng, Taipei City 104 (TW)
(74) Representative: Becker Kurig Straus

(57) **Abstract**

A method of performing a timing arrangement for a first radio node of a mesh network is disclosed. The method comprises broadcasting a synchronization packet including an information element for indicating a starting time and an ending time of an active period and a length of an interval, wherein the first node monitors a physical channel for data transmission and reception only in the active period of the interval, whereby other nodes of the mesh network receiving the synchronization packet comply with the time schedule indicated in the synchronization packet.

## Description

### Field of the Invention

The present application relates to a method of performing timing arrangement over the mesh network for power saving.

### Background of the Invention

A mesh network is a communications network made up of radio nodes organized in a mesh topology. Mesh network can be implemented with various wireless technologies including IEEE 802.11, 802.15, 802.16, cellular technologies, Bluetooth, Zigbee, Bluetooth Low Energy (BLE) and need not be restricted to any one technology or protocol. Recently, mesh network is applied for Internet of Things (loT) device connection. This makes it much simpler to build a network of connected things and is, as a bonus, relatively inexpensive.

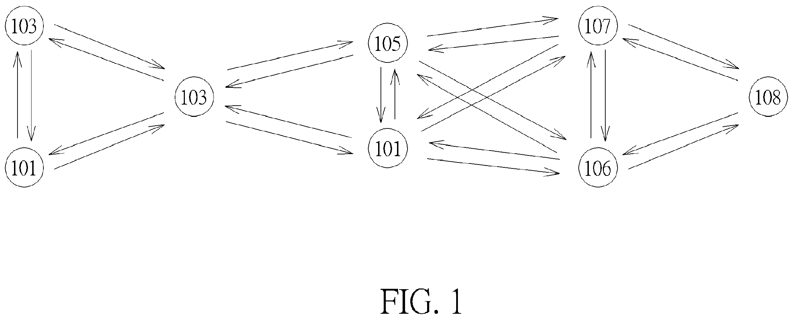

FIG. 1 is a schematic diagram of a packet flooding mesh network according to the prior art. There are several nodes (i.e. communication devices) in this mesh network. Each node can communicate wirelessly with the other nodes that are in effective range of it. Packet flooding topology is adapted in the mesh network, where every member node of the mesh network rebroadcasts the received data packet until all the member nodes receive the data packet. For example, the node 101 broadcasts a packet, that packet can be received by nodes 102 and 103 which are within the broadcasting range of the node 101. Then, the node 103 rebroadcasts the packet received from the node 101, so that the packet can be received by the node 104, which is out of range of node 101. With the same manner, the packet from the source node 101 can be transmitted to the destination node 108.

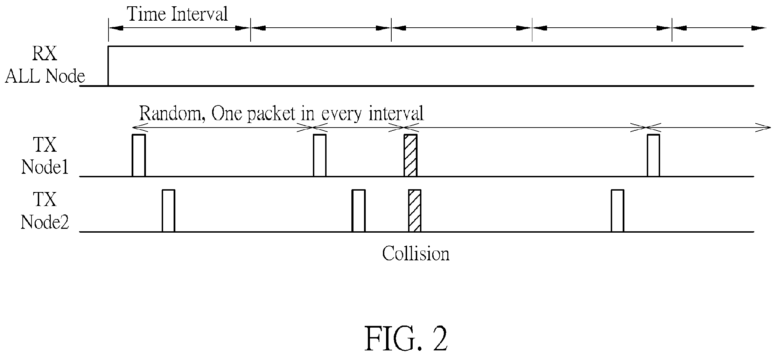

However, there are several cons in packet flooding mesh network. First, flood routing implies that all devices must broadcast the data packet without timing synchronization with other devices, it will cause a packet collision and no device can receive the correct packet. One way to prevent the packet collision is showed by FIG.2 which divides the time into a different time slot and every device (i.e. TX Node 1 and TX Node 2 of FIG. 2) broadcasts the packet "randomly" within every time interval and continue the re-broadcast of same packet in consequence time interval. The random and infinite re-broadcasting process can make sure that the packet can be transmitted to other device successfully. However, this process also means that all the devices (e.g. RX All Nodes of FIG. 2) should listen to the physical channel "all the time" since every device doesn't know when the other devices will broadcast the packet. Continuous listening will surely increases power consumption of each device.

Another drawback is that the shorter the time interval, the higher the packet collision probability, due to the random broadcast methodology. This drawback is much more serious when there is huge number of devices within the same area. One way to overcome this drawback is to increase the time interval, so there is enough time for the random broadcasting and avoiding collision with packet from other nodes. However, the more the device number, the more the time interval needed, and it causes a long latency since every device can only broadcasts one packet in a time interval.

### Summary of the Invention

The present application aims at providing a method of performing a timing arrangement in a mesh network to solve the above problems.

This is achieved by a method of performing a timing arrangement in a mesh network according to claims 1 and 9. The dependent claims pertain to corresponding further developments and improvements.

As will be seen more clearly from the detailed description following below, the claimed method of performing a timing arrangement for a first radio node of a mesh network comprises broadcasting a synchronization packet including an information element for indicating a starting time and an ending time of an active period and a length of an interval, wherein the first node monitors a physical channel for data transmission and reception only in the active period of the interval, whereby other nodes of the mesh network receiving the synchronization packet comply with the time schedule indicated in the synchronization packet.

### Brief Description of the Drawings

FIG. 1 is a schematic diagram of a packet flooding mesh network according to the prior art.
FIG. 2 is a schematic diagram of a schedule interval according to the prior art.
FIG. 3 is a schematic diagram of a communication device according to one embodiment of the present disclosure.
FIG. 4 is a schematic diagram of a schedule interval with active and sleep period according to one embodiment of the present disclosure.
FIG. 5 is a flowchart according to one embodiment of the present disclosure.
FIGs. 6-7 are schematic diagrams of a timing synchronization operation according to embodiments of the present disclosure.
FIG. 8 is a schematic diagram of a mutual synchronization operation according to one embodiment the present disclosure.
FIG. 9 is a schematic diagram of a grouped mesh network according to one embodiment of the present disclosure.
FIG. 10 is a schematic diagram of an active period of a scheduled interval of each grouped mesh network.
FIG. 11 is a schematic diagram of a subgroup mesh network re-union into the main group mesh network.
FIG. 12 is a schematic diagram of a cross-group data transmission according to one embodiment of the present disclosure.
FIG. 13 is a table of system performance of group mesh network according to one embodiment of the present disclosure.
FIG. 14 is a schematic diagram of a packet transmission with a tree routing table according to one embodiment of the present disclosure.

### Detailed Description

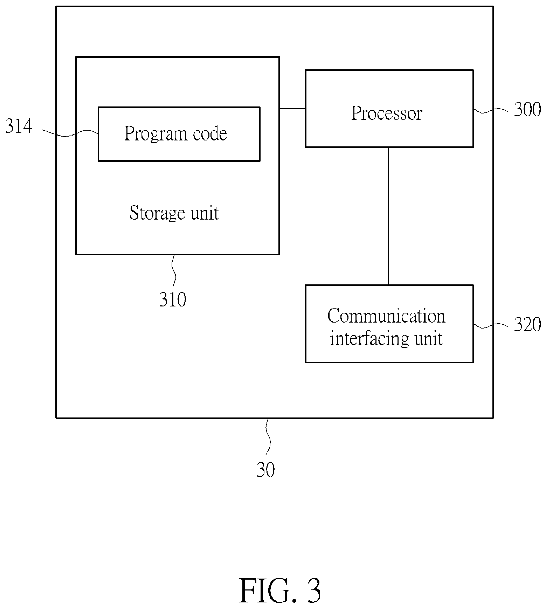

FIG. 3 is a schematic diagram of a communication device 30 according to one embodiment of the present disclosure. The communication device 30 could be any node of the mesh network as shown in FIG. 1, and includes a processor 300, such as a microprocessor or Application Specific Integrated Circuit (ASIC), a storage unit 310 and a communication interfacing unit 320. The storage unit 310 may be any data storage device that can store a program code 314, for access by the processor 300. Examples of the storage unit 310 include but are not limited to a subscriber identity module (SIM), read-only memory (ROM), flash memory, random-access memory (RAM), CD-ROMs, magnetic tape, hard disk, and optical data storage device. The communication interfacing unit 320 is preferably a radio transceiver and can exchange wireless signals with other communication devices according to processing results of the processor 300.

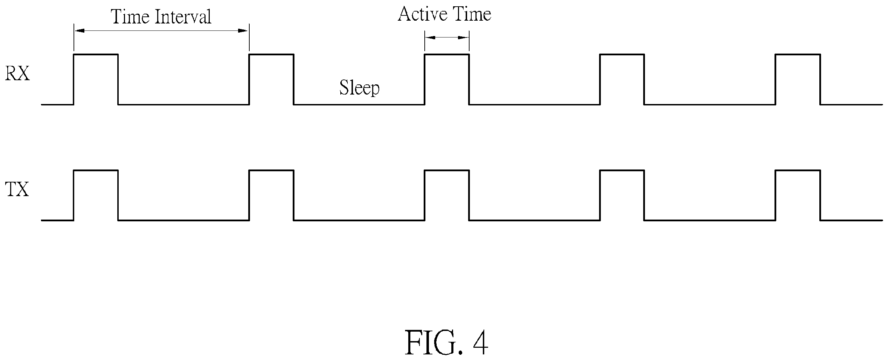

For power-saving, FIG.4 illustrates an operation for packet transmission/reception. A node of the mesh network is configured a schedule "time interval", and the "time interval" is divided into an active and sleep period. The node only transmits and receives in the active time period. It conventionally means that all the nodes of the mesh network must have the same time schedule for reception and transmission with each other. However, there is no methodology for synchronizing all nodes' time schedule.

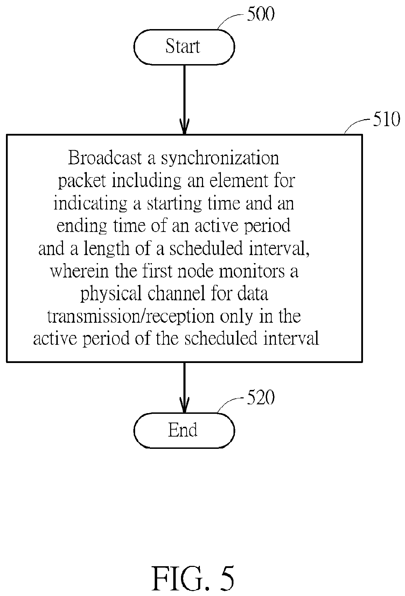

Reference is made to FIG. 5. A flowchart of a process 50 according to an embodiment of the present disclosure is illustrated. The process 50 could be utilized in the communication device 30 of FIG. 3 for timing synchronization, so as to coordinate data transmission/reception in the mesh network. The process 50 may be compiled into a program code 314 to be stored in the storage unit 310, and may include the following steps:
Step 500: Start.
Step 510: Broadcast a synchronization packet including an information element for indicating a starting time and an ending time of an active period and a length of a scheduled interval, wherein the first node monitors a physical channel for data transmission/reception only in the active period of the scheduled interval.
Step 520: End.

According to the process 30, the node broadcasts the synchronization packet including timing information for the active period, sleep period and time interval. On the other hand, other nodes of the mesh network receiving the synchronization packet comply with the time schedule indicated in the synchronization packet. That is, the nodes receiving the synchronization packet will have the same active period, sleep period and time interval as the node broadcasting the synchronization packet, so as to realize timing synchronization.

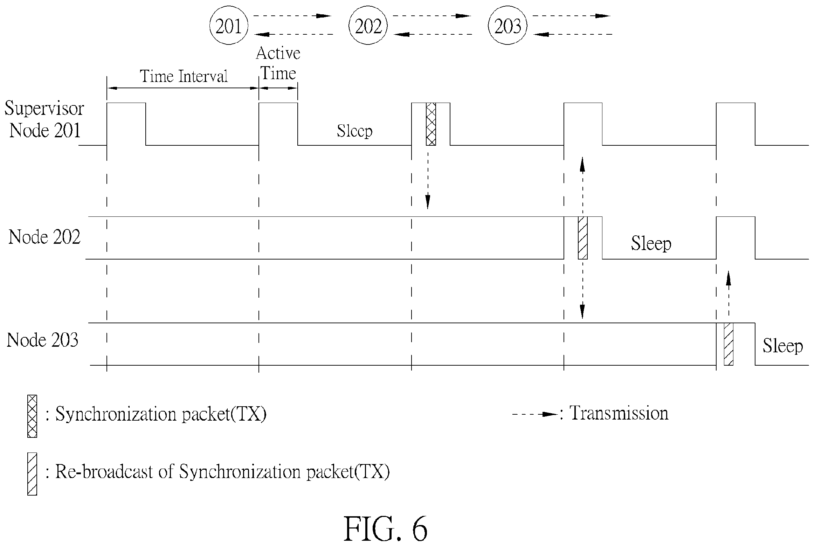

FIG.6 illustrates a timing synchronization operation according to an embodiment of the present disclosure. When starting to establish a mesh network, every node keeps active to monitor physical channel. The supervisor node 201 is charged to decide the time interval, active period, and sleep period, and then broadcasts the "synchronization packet" indicating a starting time and an ending time of the active period and a length of the time interval. When the node 202 receives the synchronization packet, it begins to follow the time schedule indicated in the received "synchronization packet", and therefore becomes synchronizing with the supervisor node 201. In addition, the node 202 rebroadcasts the "synchronization packet", such that the node 203 out of the coverage of the supervisor node 201 can receives the "synchronization packet" for synchronizing with the supervisor node 201. As can be seen, by following the mesh network broadcast topology, every node of the mesh network can receive the broadcasted "synchronization packet" and therefore synchronizing with the supervisor node 201.

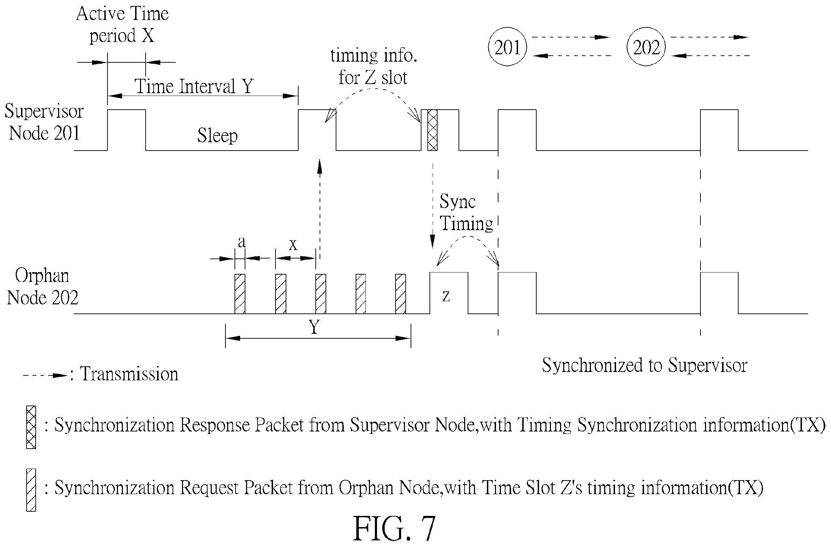

Take an example for timing synchronization operation, and reference is made to FIG. 7. At beginning, the orphan node 202 does not know the timing information of the supervisor node 201 (namely the orphan node 202 does not know when the supervisor node 201 will be active for transmitting the synchronization packet), and thus broadcasts "synchronization request packet" indicating timing information of the active period Z of the orphan node 202 with the active period X within the time interval Y of the supervisor node 201. The timing information may be a starting time and an end time of the active period Z of the orphan node 202. Since the "synchronization request packet" is transmitted periodically with the active period X within the time interval Y of the supervisor node 201, the supervisor node 201 will surely be active in one of the active period X within the interval Y and consequentially receives the "synchronization request packet" from the orphan node 202. In addition, because the "synchronization request packet" only contains the timing information and only is emitted out to let the supervisor node 201 to receive it, the transmission time period a of the "synchronization request packet" can be shorter than the active period X, so the sleep period can be increased for power saving. On the other hand, when the supervisor node 201 receives the "synchronization request packet" during the active period of the supervisor node 201, the supervisor node 201 is forced to be active in the active period Z to broadcast the "synchronization response packet" including the timing information, such as a starting time and an ending time of the active period and a length of the time interval. Since the "synchronization response packet" is transmitted at the active period Z, the "synchronization response packet" is ensured to be received by the orphan node 202. Thus, the orphan node 202 will be synchronizing with the supervisor node 201. With such manner, power consumption of the orphan node 202 can be saved as (X-a)/X. It is important if the orphan node 202 cannot find the supervisor node 201 for a long time.

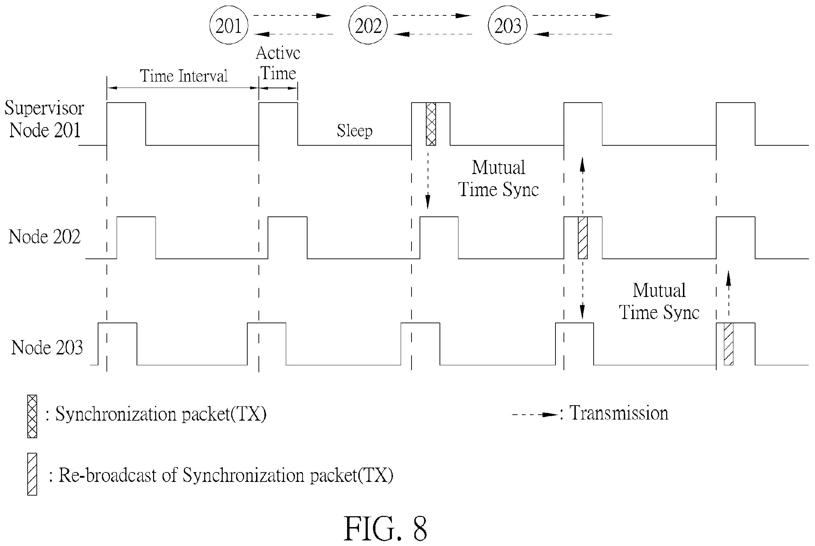

Note that, since the operating hardware clock of every node will be slightly different from others due to the variation of hardware components, the time schedule mismatch may occur when time goes on. As shown in FIG.8, the supervisor node 201 will keep sending the synchronization packet periodically, so every node can re-synchronize to the same time schedule of the supervisor node 201. As long as the synchronization packet period can be smaller enough to make sure every node can be active in the active time period of the supervisor node 201, and receive the synchronization packet, the timing synchronization can work well. Similarly, every node in the mesh network will re-broadcast the synchronization packet, and receives the re-broadcasted synchronization packet from other nodes. Since the time variation of each node is a random distribution, with the mutual synchronization methodology of FIG. 8, the time schedule of the mesh network will converge to a stable matching condition.

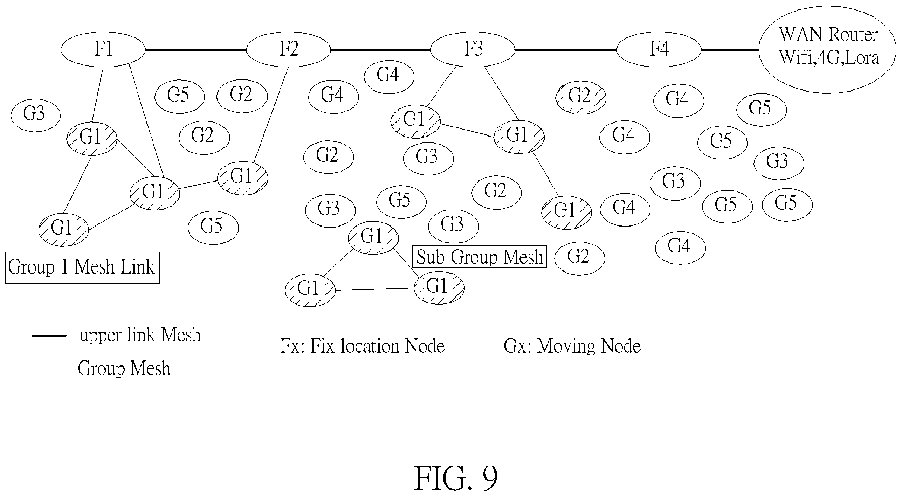

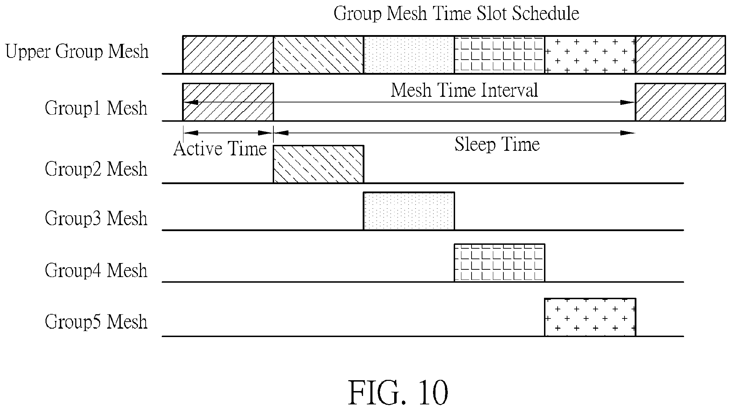

FIG.9 illustrates a group mesh network according to one embodiment of the present disclosure. In FIG. 9, the mesh network includes a huge number of nodes crowded in the same area. The packet collision will be very serious since too many nodes will broadcast within the active period. Conventionally, a solution is to set a very long active period to prevent packet collision. However, it is not a good way since the longer the active period, the bigger the power consumption. As a result, a multi-layer grouped mesh network is introduced. FIG.9 shows that several nodes are grouped to form the upper group mesh networks F1-F5 respectively and other nodes are grouped into several group mesh networks G1-G5. The packet collision can be prevented by setting every group mesh networks, i.e. G1-G5 with staggered active period as shown in FIG. 10. That is, when the group mesh network G1 is in active period, other group mesh networks G2-G5 is in sleep period, so as to avoid packet collision between group mesh networks G1-G5. Therefore, even many nodes crowded in the same area, the packet collision will only happen between nodes in the same group. In addition, packet collision probability can be controlled by limiting the group member number.

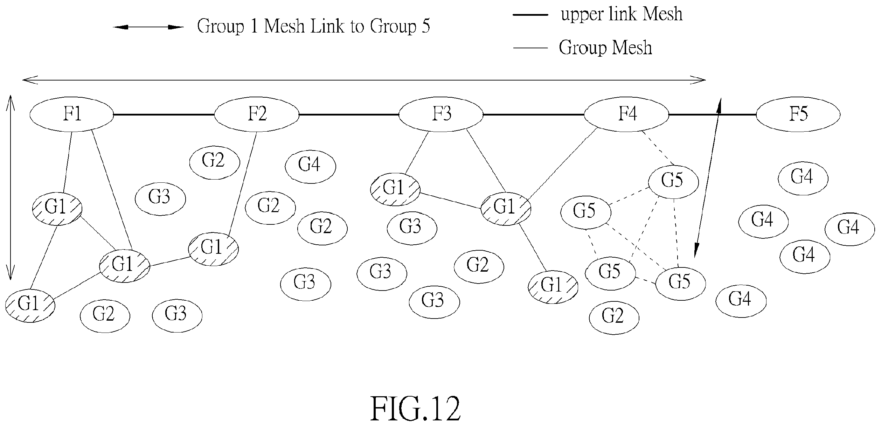

In an embodiment, the member of upper group mesh network will keep active in the active period of every group mesh network, i.e. G1-G5, and thus is able to communicate with every group mesh network. In the other words, member of the upper group mesh network belong to a specific group mesh network at the specific active period of that group mesh network. Therefore, the upper group mesh network can be a link of the same group mesh network when some members are far away from the group. This methodology is useful for the moving node. For example, as shown in FIGs. 10 and 12, some member of group mesh network G1 is closed to the upper group mesh network F3, and thus when the group mesh network G1 is active to broadcast packet, the upper group mesh network F1 can be also active and transmits the packet to the upper group mesh networks F2-F3. Thus, the upper group mesh network F3 can transmit the packet to the member of group mesh network G1, which is far away from the main group mesh network G1.

Besides, with upper group mesh network, different group mesh networks can communicate with each other. For example, the nodes of group mesh network G1 cannot communicate with nodes of group mesh network G5 since they are in different active periods. However, by upper group mesh networks F1-F4, the group mesh network G1 can communicate with the group mesh network G5 linked to the upper group mesh network F4. In detail, the group mesh network G1 in the active period broadcasts the data packet and the upper group mesh network F1 with the same active period as the group mesh network G1 receives it. Then, the upper group mesh network F1 broadcasts the received data packet, and thus other upper group mesh networks F2-F4 receive the data packet. Finally, the upper group mesh network F4 broadcasts the received data packet to the group mesh network G5 during the active period of the group mesh network G5. In other words, even the group mesh network G2-G5 are in sleep period during data transmission of the group mesh network G1, the member of the upper group mesh network can be the bridge link between the different group mesh network.

In other embodiments, the upper group mesh network has its own active period for the mesh network to work. For example, the active period duration of the upper group mesh network and group mesh network is different. However, the sum of all the active period duration of every group mesh network is the time interval of the whole mesh network.

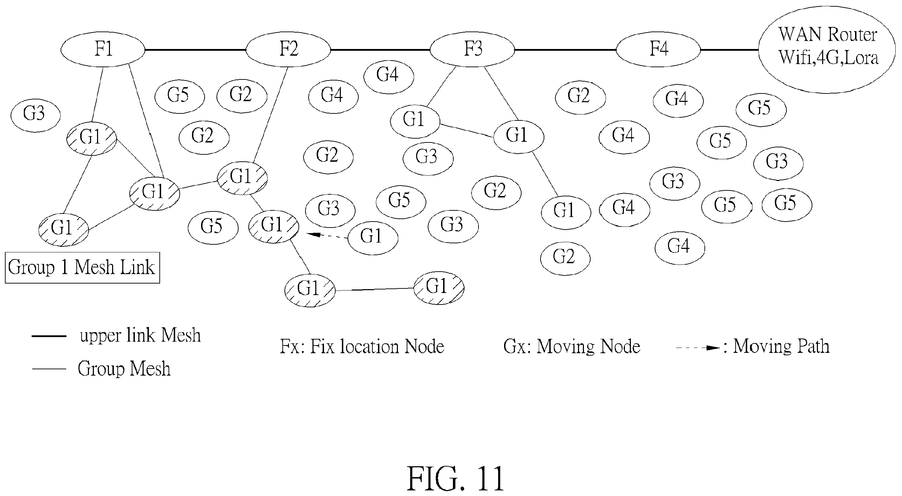

Referring back to FIG. 9, which shows a sub-group mesh network. Some nodes of group mesh network G1 move to a position far from the original group mesh network G1. Those nodes are not linked to the mother group mesh network G1 and any upper group mesh network. Since those nodes have the same active period, they can still perform packet transmission/reception with each other, so as to form the sub-group mesh network. Note that, though no node of the sub-group mesh is within the RF range of the group mesh network G1, the sub-group mesh can keep its own packet and still transfer the packet back to the main group mesh network G1 when any node of the sub-group mesh network moves into the RF range of main group mesh network G1 by the infinite re-broadcast methodology with the same active period, so called the reunion of group mesh network as shown in FIG. 11.

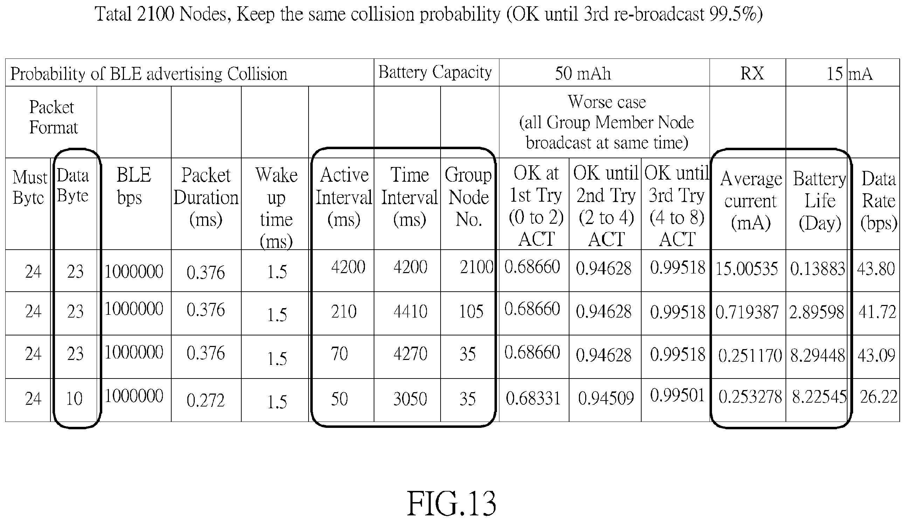

FIG. 13 shows analysis of a 2100 nodes mesh network by keeping the worst-case success probability after 3 times re-broadcast as 99.5%. In this example, worst-case means that all the group member nodes start the broadcasting at the same time slot. If group node number is 2100, which means no group separation, the active time period is 4200mS. If setting the group node number to 35, with almost the same time interval, 4270ms, the active period is 70ms. It can save 4130/4200, namely 98% of power saving.

Moreover, if most of the nodes in the group mesh network are fixed, it is possible to create a tree routing table of the mesh network and use this table to simplify the re-broadcast from node to root, so as to prevent packet collision. By utilizing tree routing table, packet collision free is realized at first broadcast and preventing time waste for packet re-transmission. In addition, active period is minimized but still keeps the low packet collision rate since packet re-transmission in the mesh network is decreased.

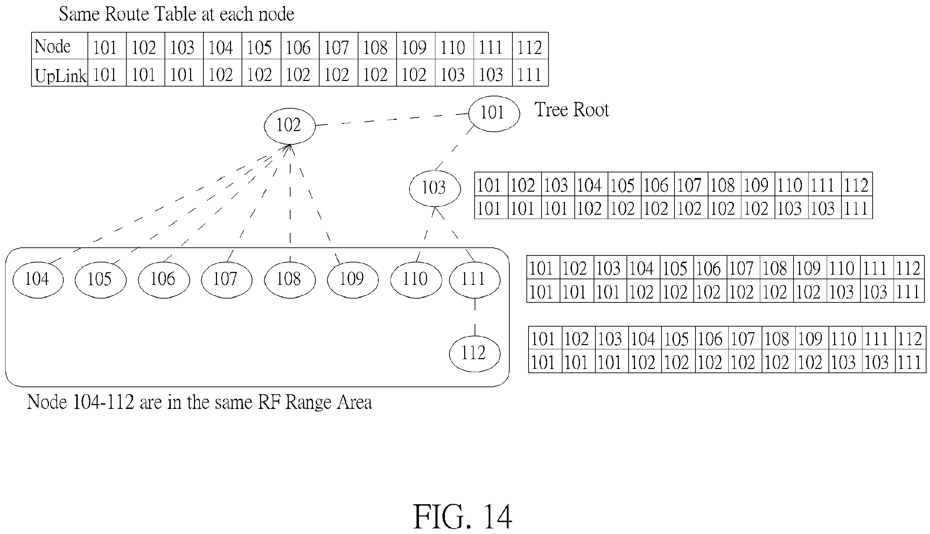

In detail, the tree routing table for mesh network broadcast is focusing on simplifying data packet communication, so the new methodology is to hand over a portion of routing work from supervisor node to every node to minimize the time delay. At first, all nodes of the mesh network establish their own "neighbor list" (by setting the sleep period = 0) with the same procedure in our previous patent application 15/334,294, then each node broadcasts its neighbor list to the supervisor node for the supervisor node to create the tree routing table. FIG. 14 shows one example of the tree routing table. The tree root can be any node and usually the Hub device of the mesh network. It is possible to create many tree routes with several nodes as root, depends on the application.

Supervisor node establishes the only one tree routing table and sends every node the same tree routing table. The tree routing table only contains the upper link node information of every node of the tree. Since the tree routing table stored at every node is the same one, supervisor node only needs to broadcast it once, so it only occupies a little bit of bandwidth for this work. The tree routing table is a data structure to indicate the upper node ID of every node of the tree, so the size of the tree routing table equals to the (node number *ID size). Take an example of a group mesh with 105 nodes, the tree routing table size = 105 * 1 byte = 105 bytes. It is feasible for the mesh network to work on this algorithm since it only needs 1 packet broadcast with 105 bytes to spread this tree routing table to every node.

For an example of node-to-root transmission, the sender node 112 transmits a packet to the destination node 101. First, when the node 111 receive a packet from the node 112, the node 111 will checks the tree routing table to see if it is an uplink node of the node 112. If yes, the node 111 knows the packet is from its downlink node and it should re-broadcast the packet to the node 103. Finally, the node 103 broadcast the received packet to the destination node 101. At the same time, the node 110 receives the same packet from the sender node 112. However, the node 110 checks the tree routing table and finds that it is not the uplink node of the node112, so that the node 110 will NOT re-broadcast this packet. Thus, the packet collision caused by the re-broadcast (i.e. from the nodes 110 and 111) can be prevented.

Since there is only one path from Node-to-Root in the tree routing table and every node will only re-broadcast the packet if it is the uplink of the sender of the packet, then the rebroadcast packet by the next node, the uplink node, can be treat also as the acknowledge packet to the sender node. If the node receives the ACK package, it knows that the uplink node has received the packet, so the node can stop the infinite re-broadcast of the same packet. This will also prevent the packet collision and also save power.

However, multiple trees for multi roots are possible when every node keep the tree routing table of each tree and will check multiple tables to decide whether to re-broadcast.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 30.

In conclusion, the present invention aims at power saving with timing arrangement in the mesh network. In detail, with timing synchronization operation, every node of the mesh network is active and sleeps at the same time, so as to save power by the sleep period and avoid transmission latency by the active period. In addition, under time synchronization method, nodes of the mesh network can be gathered into groups with different active periods, which reduce the packet collision possibility between different groups, so as to save power. Besides, tree routing table is applied for determining whether to re-broadcast data packets, so as to realize packet collision free and power saving.

## Claims

1. A method of performing a timing arrangement for a first radio node of a mesh network, **characterized by** the method comprising:
broadcasting a synchronization packet including an information element for indicating a starting time and an ending time of an active period and a length of an interval, wherein the first node monitors a physical channel for data transmission and reception only in the active period of the interval (510);
whereby other nodes of the mesh network receiving the synchronization packet comply with the time schedule indicated in the synchronization packet.

2. The method of claim 1, further comprising:
receiving a request message for synchronization, from a second node, wherein the request message indicating a timing information of an active period on the second node; and
transmitting a response message on the active period according to the timing information, wherein the response message including the information element for indicating the starting time and the ending time of the active period and the length of the interval, to the second node.

3. The method of claim 1, further comprising:
configuring a first group of a plurality of groups from the mesh network, wherein nodes of each group includes the same active period but each group has staggered active period.

4. The method of claim 3, further comprising:
moving out from a coverage of the first group; and
rejoining the first group by performing data transmission and reception with the nodes of the first group with the same active period of the first group when moving into the coverage of the first group.

5. The method of claim 3, further comprising:
performing data transmission with a second group of the plurality of groups via at least a upper group from the mesh network, wherein an active period of the at least a upper group covers both of the active periods of the first group and the second group.

6. The method of claim 1, further comprising:
receiving a tree routing table from a supervisor node of the mesh network, wherein the tree routing table includes uplink node information of every node of the mesh network, and is a only table established by the supervisor node for every node of the mesh network; and
performing data transmission according to the tree routing table.

7. The method of claim 6, **characterized in that** the step of performing data transmission according to the tree routing table comprises:
receiving a data packet from a second node;
check whether the first node is an uplink node of the second node according to the tree routing table;
when the first node is the uplink node of the second node, broadcasting the received data packet to an uplink node of the first node; and
when the first node is not the uplink node of the second node, ignoring the received data packet.

8. The method of claim 7, further comprising:
stopping broadcasting the received data packet when receiving the same data packet from the uplink node of the first node.

9. A method of performing a timing arrangement for a second radio node of a mesh network, **characterized by** the method comprising:
receiving a synchronization packet including an information element for indicating a starting time and an ending time of an active period and a length of an interval, from a first node of the mesh network;
complying with the time schedule indicated in the synchronization packet by monitoring a physical channel for data transmission and reception only in the active period of the interval; and
broadcasting the synchronization packet.

10. The method of claim 9, further comprising:
transmitting a request message for synchronization, to a first node, wherein the request message indicating a timing information of an active period on the second node; and
receiving a response message on the active period according to the timing information, wherein the response message including the information element for indicating the starting time and the ending time of the active period and the length of the interval, from the first node.

11. The method of claim 10, **characterized in that** transmitting the request message for synchronization, to the first node comprises:
transmitting the request message within the interval indicated by the first node; or
transmitting the request message with the active period indicated by the first node within the interval; or
transmitting the request message with the active period in a transmission length of the request message shorter than the active period within the interval.

12. The method of claim 9, further comprising:
configuring a first group of a plurality of groups from the mesh network, wherein nodes of each group includes the same active period but each group has staggered active period.

13. The method of claim 12, further comprising:
moving out from a coverage of the first group; and
rejoining the first group by performing data transmission and reception with the nodes of the first group with the same active period of the first group when moving into the coverage of the first group.

14. The method of claim 12, further comprising:
performing data transmission with a second group of the plurality of groups via at least a upper group from the mesh network, wherein an active period of the at least a upper group covers both of the active periods of the first group and the second group.

15. The method of claim 9, further comprising:
receiving a tree routing table from a supervisor node of the mesh network, wherein the tree routing table includes uplink node information of every node of the mesh network, and is a only table established by the supervisor node for every node of the mesh network; and
performing data transmission according to the routing table.

16. The method of claim 15, **characterized in that** the step of performing data transmission according to the tree routing table comprises:
receiving a data packet from a third node;
checking whether the second node is an uplink node of the third node according to the tree routing table;
when the second node is the uplink node of the third node, broadcasting the received data packet to an uplink node of the second node; and
when the second node is not the uplink node of the third node, ignoring the received data packet.

17. The method of claim 16, further comprising:
stopping broadcasting the received data packet when receiving the same data packet from the uplink node of the second node.
